# EUROPEAN PATENT APPLICATION

(11) **EP 2 708 710 A2**
(43) Date of publication of application: **19.03.2014**
(21) Application number: 13182813.9
(22) Date of filing: 03.09.2013
(51) Int. Cl.: F01N 3/20

(54) **Fluid distribution system and components thereof**

(30) Priority: 13.09.2012 US 201213613156
(71) Applicant: TI Group Automotive Systems, L.L.C., Auburn Hills, MI 48326 (US)
(72) Inventor: Crary, Lynwood F., Preston, CT Connecticut 06365 (US)
(74) Representative: von Kreisler Selting Werner

(57) **Abstract**

A fluid distribution system of a selective catalytic reduction (SCR) system may include a storage tank (18) and a fluid distribution module (20) disposed at least partially within the storage tank. The distribution module includes a pump assembly (40) comprising a fluid pump (42) having a pump inlet (84) configured to receive liquid from an inner volume (24) of the tank, and a pump outlet (86) fluidly connected to a module outlet port (100). The distribution module further includes a fluid discharge jet (46) fluidly connected to the pump outlet and operable to discharge liquid from the pump outlet and into the tank volume. The distribution module further includes a valve (58) disposed between the pump outlet and the discharge jet operable to selectively allow liquid fluid flow from the pump outlet to the discharge jet when one or more predetermined criteria are met.

## Description

### Technical Field

The present disclosure relates generally to the distribution of fluids in a selective catalytic reduction system.

### Background

Selective catalytic reduction (SCR) may be used to treat exhaust gases from combustion-type power plants such as internal combustion engines or other fuel burning devices to remove certain types of pollutants. For example, a reducing agent may be introduced into an exhaust gas stream in the presence of a catalyst to remove NOₓ compounds from the exhaust gases and replace them with gases such as water vapor, nitrogen, and/or carbon dioxide. Urea is one example of a reducing agent that may be used in an SCR system. SCR systems may be configured to deliver stored reducing agent to an injector or other delivery point located at an exhaust system component to disperse or insert the agent into the exhaust stream to be treated.

SCR systems that are located on-board vehicles or other mobile equipment may include a distribution system comprising, in part, storage tanks for storing the reducing agent, and a distribution module that distributes the reducing agent from the tank and into the exhaust stream to be treated. Where urea is used as the reducing agent, it may be dissolved in water at a desired concentration for practical use and stored in the storage tank. However, even when present at a concentration that serves to minimize the freezing point of the liquid comprising the urea solution, the freezing point of the liquid is still within typical cold weather temperature ranges in many parts of the world. Even with SCR systems that include means for heating the liquid (including frozen liquid) in the storage tank, heating sources are often limited to localized areas of the system and may not be able to heat the entire distribution system effectively, thereby potentially resulting in a build-up of frozen material in the storage tank that may detrimentally impact the operation of the SCR system.

### Summary

In one implementation, a fluid distribution module includes a pump assembly comprising a fluid pump having a pump inlet configured to receive liquid from an inner tank volume, and a pump outlet fluidly connected to a module outlet port. The fluid distribution module further includes a fluid discharge jet fluidly connected to the pump outlet and operable to discharge liquid from the pump outlet and into the tank volume. In an exemplary embodiment, the fluid distribution module still further includes a valve disposed between the pump outlet and the fluid discharge jet operable to selectively allow fluid flow from the pump outlet to the fluid discharge jet when one or more predetermined criteria are met.

In another implementation, a fluid distribution module includes a pump assembly comprising a fluid pump having a pump inlet configured to receive liquid from an inner tank volume, and a pump outlet fluidly connected to a module outlet port. The fluid distribution module further includes a fluid filter having an inlet side fluidly connected to the pump outlet, an outlet side including an outlet port for discharging liquid from the filter and into the tank volume, and a filter element disposed between the inlet and outlet sides of the fluid filter. The fluid filter is capable of removing contaminants from the liquid that flows through the filter element. The fluid distribution module still further includes a fluid discharge jet fluidly connected to the pump outlet and operable to discharge liquid from the pump outlet and into the tank volume. In an exemplary embodiment, the fluid distribution module yet still further includes a valve disposed between the pump outlet and both the inlet side of the fluid filter and the fluid discharge jet. The valve is operable to selectively allow fluid flow from the pump outlet to both the fluid filter and the fluid discharge jet when one or more predetermined criteria are met.

In yet another implementation, a fluid distribution system for use in a SCR system includes a tank having an inner volume containing liquid, the inner volume including an upper and a lower portion. The fluid distribution system further includes a fluid distribution module disposed within the tank volume. The fluid distribution module includes a pump assembly comprising a fluid pump having an inlet configured to receive liquid from the lower portion of the tank inner volume, and a pump outlet fluidly connected to a module outlet port. The fluid distribution module further includes a fluid discharge jet fluidly connected to the pump outlet and operable to discharge liquid from the pump outlet and into the tank inner volume in a substantially vertical direction toward the upper portion of the tank inner volume. The fluid distribution module still further includes a valve disposed between the pump outlet and the fluid discharge jet. The valve is operable to selectively allow fluid flow from the pump outlet to the fluid discharge jet when one or more predetermined criteria are met.

### Brief Description of the Drawings

FIG. 1 is a schematic representation of an SCR system providing a reducing agent in an exhaust gas stream, according to one embodiment;

FIG. 2 is an enlarged view of a portion of FIG. 1 showing an exemplary embodiment of a fluid distribution system of the SCR system of FIG. 1;

FIG. 3 is an enlarged view of a portion of FIG. 1 showing another embodiment of a fluid distribution system of the SCR system of FIG. 1;

FIG. 4 is an enlarged view of a portion of FIG. 1 showing yet another exemplary embodiment of a fluid distribution system of the SCR system of FIG. 1;

FIG. 5 is a top view of an exemplary embodiment of a fluid distribution module of the fluid distribution system of Fig. 2; and

FIG. 6 is a side view of the fluid distribution module of FIG. 5.

### Detailed Description

As will become apparent from the following disclosure, various embodiments of SCR or other fluid handling systems and methods may offer one or more advantages over previously known systems and methods. It is noted that, except as otherwise described, the schematics in the figures are not meant to indicate actual component sizes or locations in the illustrated systems. They are meant only as examples of arrangements of SCR or fluid distribution system components that indicate how the different components may function together. Further, these and other embodiments of fluid distribution systems having the functionality described herein are not limited to SCR systems, as other fluid handling systems may find these teachings advantageous.

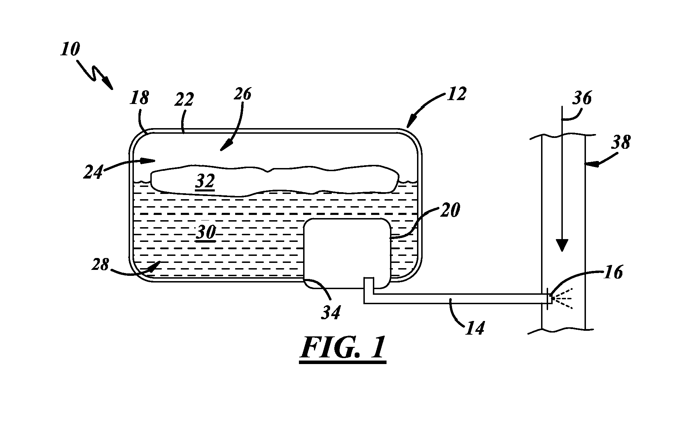

Referring now to FIG. 1, an example of an SCR system 10 is illustrated schematically and includes a fluid distribution system 12, a device supply line 14, and a device 16. In this embodiment, the distribution system 12 includes a storage tank 18 and a fluid distribution module 20. The storage tank 18 includes one or more walls 22 arranged to at least partially define an inner tank volume 24, which, in turn, has a top or upper portion 26 and a bottom or lower portion 28. Liquid 30 is stored in the tank volume 24 with the remainder of the tank volume 24, such as above the liquid 30, being occupied by frozen material 32 comprised of liquid 30 that has frozen, and/or air or other gaseous fluid.

The distribution module 20 is an assembly that distributes liquid to other SCR system components and/or within the distribution system 12. As shown in the embodiment of FIG. 1, the distribution module 20 may be attached to the storage tank 18, and at least a portion of the module 20 may extend through a module opening 34 formed through one or more walls 22 of the storage tank 18. The distribution module 20 may be manufactured as a single, multi-component assembly to be easily installed in or over the module opening 34 in the tank and will be described in greater detail below.

The device supply line 14 fluidly connects the distribution system 12 to the device 16. The device 16 in this case is a liquid injector that receives liquid 30 from the storage tank 18 via the supply line 14. In other embodiments, the device 16 may be a simple nozzle, an atomizer, or any other type of device that receives liquid. In the example shown, doses of a reducing agent, included as part of the liquid 30, are delivered to and dispersed by the injector 16 into an exhaust gas stream 36 flowing through an exhaust conduit 38 from a combustion engine, for example. One example of a reducing agent for use in the SCR system 10 is urea, though other agents may be used. The urea may be in the form of an aqueous solution at any desired concentration, such as a concentration that minimizes the freezing point of the solution. As used herein, the term "reducing agent" generally refers to the liquid (or in some cases frozen) solution stored in the tank 18, in the context of SCR systems.

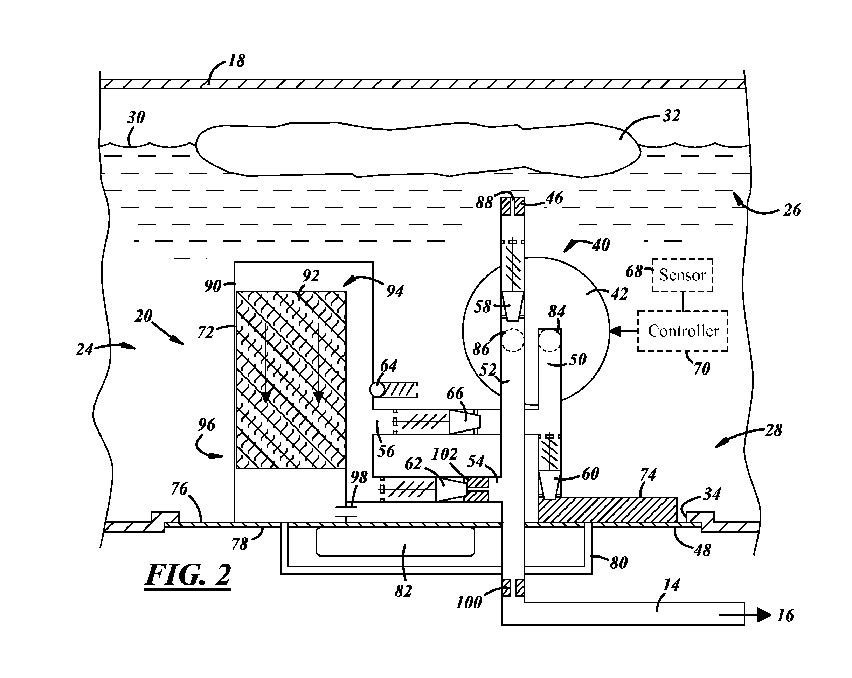

Referring to FIG. 2, there is shown one implementation of the fluid distribution module 20. The illustrated module 20 is configured to be mounted at the bottom of the storage tank 18, but may alternatively be mounted at the top of the tank 18 or elsewhere. As shown, at least a portion of the module 20 may be located within the storage tank volume 24, while other portions may be located outside the tank volume. The distribution module 20 may include a pump assembly 40 comprising, at least in part, a fluid pump 42 and a motor 44 operable to drive the pump 42, and one or more fluid discharge jets 46 fluidly connected to the pump 38, as will be described in greater detail below.

In various embodiments, the distribution module 20 may further include a mounting flange 48 to which one or more components of the distribution module 20 may be mounted, one or more fluid lines 50-56, one or more valves 58-66, one or more sensors 68, a controller 70 electrically connected to, for example, the sensor(s) 68 and/or the pump assembly 40, a fluid filter 72, and a strainer 74, the operation of each of which will be described in further detail below. Fluid lines 50-56 are shown schematically in, for example, FIG. 2 and are not limited to traditional tubular conduits or to the locations or positions shown. As used herein, the term "fluid line" refers to any component of the system through which fluid flows. For example, in addition to a fluid conduit, a fluid line may also be a hard connection between two ports through which a fluid may pass, a valve or valve body, a channel or hollow area in a component through which fluid may pass, etc. Additionally, while at least valves 60-66 shown in, for example, FIG. 2 are all one-way, pressure-actuated check valves, any type of valve and/or valve actuator configured for use as described herein may be used. In the illustrated embodiment, these components are all located on a tank side 76 of the flange 48. As will be described below, an opposite outer side 78 of the flange 48 includes a housing 80 in which other module or system components may be located, such as a heater 82. The module 20 may of course include additional components not shown here, and one or more of the illustrated components may be omitted.

The fluid pump 42 draws liquid 30 from the tank volume 24 into a pump inlet 84 and discharges the liquid from a pump outlet 86. The fluid pump 42 may be capable of forward and reverse operation, where liquid 30 is discharged from the pump outlet 86 during forward operation and from the pump inlet 84 during reverse operation. The fluid pump 42 may be a positive displacement pump such as a gear pump, a gerotor pump, an impeller-type pump, or any other pump that causes fluid to flow into an inlet and out of an outlet. In one embodiment, the pump 42 is a gerotor pump and is capable of reversing the direction of fluid flow therethrough when an internal gear is turned in a reverse direction. Various methods of turning the internal gear of the pump may be used, including coupling any of a variety of electric motors therewith. Other types of reversible or non-reversible pumps may be used. In one embodiment, the motor 44 may comprise a brushless DC motor that may be coupled with the fluid pump 42 via a magnetic coupling, but other motors and/or couplings may be employed. For example, a motor output shaft may be directly coupled to a pumping element such as a gear or impeller. The fluid pump 42 is capable of providing a fluid pressure and a fluid flow rate sufficient to operate the injector 16 and may be capable of providing a flow rate that is greater than that required to operate injector 16. For example, the fluid pump 42 may be capable of providing a volumetric or mass flow rate from about 2 to about 400 times the flow rate required by the injector 16, and may preferably be able to provide from about 20 to about 300 times the injector operational flow rate.

As made reference to above, one known challenge with certain fluid distribution systems, and particularly those of SCR systems, is that the freezing point of the liquid being distributed is within typical cold weather temperature ranges in many parts of the world. Accordingly, for fluid distribution systems used in cold temperature climates, at least some of the liquid 30 in the tank volume 24 may freeze, thereby resulting in a potentially significant reduction in the amount of liquid 30 available for use during operation of the SCR system 10. To address this challenge, the fluid distribution system 20 may include one or more fluid discharge jets 46.

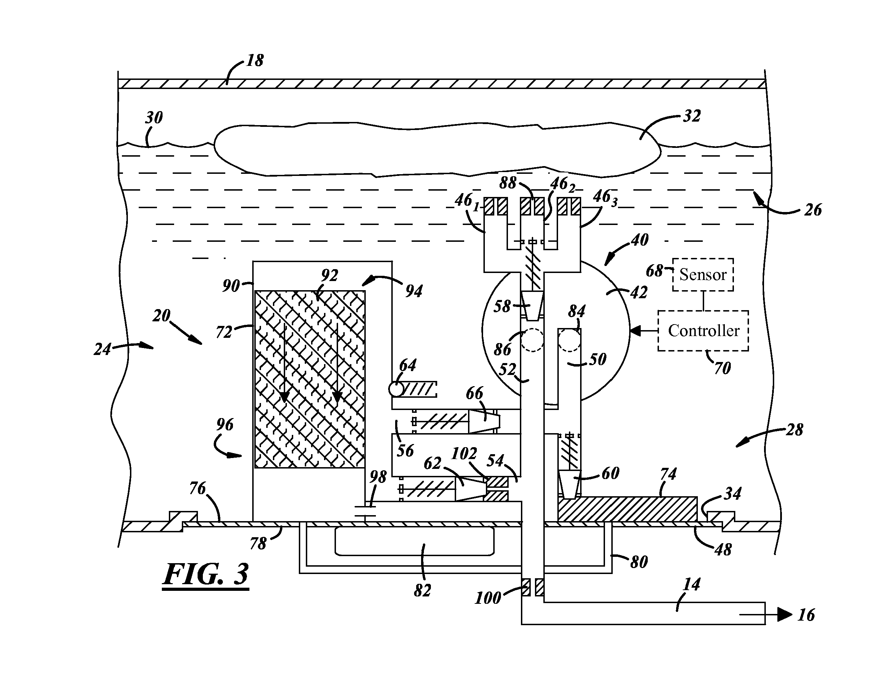

Whether the fluid distribution system 20 includes one (see, for example, FIG. 2) or multiple (see, for example, FIG. 3) fluid discharge jets 46, each fluid discharge jet is fluidly connected to the pump outlet 86 of the fluid pump 42 and operable to discharge liquid 30 therefrom to the tank volume 24 during a distribution cycle of the SCR system 10 (i.e., when the module 20 is operating to provide liquid to the injector 16 of the SCR system 10). More particularly, each fluid discharge jet 46 is configured to provide a stream of liquid through an orifice 88 of the fluid discharge jet 46 that may be directed toward frozen material 32 in the tank volume 24 to melt the frozen material 32. In an exemplary embodiment, the orifice 88 has an inner diameter on the order of 0.3-0.5 millimeters, though the present disclosure is not meant to be so limited. As illustrated in FIG. 2, in an exemplary embodiment, the fluid discharge jet 46 is oriented substantially vertically such that it is operable to discharge liquid 30 in a substantially vertical direction toward the upper portion 26 of the tank volume 24, and the frozen material 32 between a vapor area or space above the frozen material 32 and the liquid 30 disposed below the frozen material 32, in particular.

In the embodiment illustrated in FIG. 2, the fluid discharge jet 46 is disposed in close proximity to the pump outlet 86 and fluidly coupled thereto via a fluid line, such as, for example, a portion of the outlet line 52 described in greater detail below, or another fluid line that is connected to the pump outlet 86. One reason for orienting the fluid discharge jet 46 in the illustrated manner, and therefore, melting the frozen material 32 above the fluid discharge jet 46, is to provide more liquid 30 for the fluid pump 42 to distribute to other components of the SCR system 10. Another reason for orienting the fluid discharge jet 46 in this manner is to create a passage extending through the frozen material to the vapor area or space in the tank volume 24 above the frozen material. Such a passage may serve a number of purposes and provide a number of benefits.

For example, such a passage would allow for liquid added to the tank volume 24 from the top of the tank 18, and above the frozen material, to flow down to the lower portion 28 of the tank volume 24 and into, for example, a cavern that may form around the base of the fluid distribution module 20 as liquid 30 is drawn out of the tank volume 24 by the pump 42. Accordingly, rather than the added liquid pooling on top of the frozen material where it cannot be reached by the pump 42, and thus, cannot be distributed to other components of the SCR system 10, the added liquid may flow down through the passage to an area in the tank volume 24 where it can be distributed by the pump 42 as intended.

Another purpose or benefit of such a passage is that it may serve to vent the cavern formed around the distribution module 20 and prevent, or at least substantially limit, the formation of a vacuum within the cavern as liquid 30 is withdrawn from it.

The vertical melting of the frozen material as described above presents one or more of its own unique challenges, however. For example, the liquid 30 in the tank volume 24 may not freeze uniformly. As result, voids may form in the frozen material. These voids may be sufficiently large to hold a relatively significant amount of liquid. As a result, liquid 30 directed toward the frozen material by the discharge jet 46 may fill and be retained within these voids, and not return back to the fluid module 20 or the pump 42 thereof where it may be distributed by the pump 42. This is especially true if the vehicle on which the SCR system 10 is installed is operating at an angle (e.g., travelling over an uneven surface, or up or down a hill) which may cause the liquid resulting from the melting of the frozen material and/or the liquid 30 discharged by the jet 46 to flow into these voids. As a result of liquid 30 being held in voids of the frozen material, less liquid 30 is available for the pump 42 to distribute to other components of the SCR system 10. As such, there is a potential that the pump 42 could be starved of liquid, thereby adversely impacting the operation of the SCR system 10.

Similarly, because the passage extends through the frozen material to the vapor area or space of the tank volume 24 above the frozen material, any liquid 30 directed through the passage by the discharge jet 46 and reaching the vapor area above the frozen material may potentially pool on the top of the frozen material and not return back to the fluid module 20 or the pump 42 thereof. Again, this is especially true if the vehicle on which the SCR system 10 is installed is operating at an angle (e.g., travelling over an uneven surface, or up or down a hill) which may cause the liquid 30 to pool on top of the frozen material as opposed to flowing back down the passage. When liquid 30 pools on top of the frozen material, there is less liquid 30 for the pump 42 to distribute to other components of the SCR system 10. As such, there is again a potential that the pump 42 could be starved of liquid, thereby adversely impacting the operation of the SCR system 10.

One way in which the starving of the pump 42 may be substantially avoided is to limit the amount of liquid 30 being discharged by the fluid discharge jet 46. This may be accomplished by, for example, controlling when and/or for how long liquid is being discharged therefrom. For example, the fluid distribution module 20 may further include a valve 58 disposed between the pump outlet 86 and the fluid discharge jet 46. The valve 58 is operable to selectively allow liquid fluid flow from the pump outlet 86 to the fluid discharge jet 46. More particularly, the valve 58 is operable to allow liquid fluid flow from the pump outlet 86 to the fluid discharge jet 46 only when, as will be described in greater detail below, one or more predetermined criteria are met.

In an exemplary embodiment, the valve 58 is a pressure-actuated valve having a high pressure set point. More specifically, the valve 58 may be configured to "open" (i.e., allow liquid fluid flow from the pump outlet 86 to the fluid discharge jet 46) when the fluid pressure at the pump outlet 86, and therefore, the pump outlet side of the valve 58, meets or exceeds a predetermined fluid pressure level (e.g., the minimum fluid pressure level required to open the valve 58). In an exemplary embodiment, the valve 58 may be configured to open when the fluid pressure at the pump outlet 86 is a certain degree higher than the normal fluid pressure of the fluid distribution system 12. For example, if the normal fluid pressure of the system 12 is 5 bar, the valve 58 may be configured to open when the fluid pressure is increased to 5.5 bar. It will be appreciated that the preceding example is provided for exemplary purposes only and is not meant to be limiting in nature. Those of ordinary skill in the art will appreciate that fluid distribution systems having fluid pressure levels that are greater or less than that provided above, and valves that are configured to actuate at fluid pressure levels that are greater or less than that described above, remain within the spirit and scope of the present disclosure.

Accordingly, and in general terms, when the fluid distribution module 20 is operating normally - e.g., at normal fluid pressure levels - the valve 58 is "closed" and no liquid 30 is allowed to flow from the pump outlet 86 to the fluid discharge jet 46, and thus, no liquid 30 is discharged by the fluid discharge jet 46. Conversely, when the fluid pressure is sufficiently increased, the valve 58 is opened, thereby allowing liquid fluid flow between the pump outlet 86 and the jet 46 resulting in liquid 30 being discharged from the fluid discharge jet 46. Accordingly, the ability to open and close the valve 58 renders it operable to selectively allow liquid fluid flow between the pump outlet 86 and the jet 46.

It will be appreciated that while the valve 58 has thus far been described as comprising a pressure-actuated valve, in other exemplary embodiments the valve may comprise a different type of valve. For example, in one exemplary embodiment, the valve 58 may comprise an electromechanical valve (e.g., a solenoid valve) or any other suitable valve that is configured to open and close when, as will be described below, certain criteria are met. Accordingly, the present disclosure is not meant to be limited to any one particular type of valve.

It will be further appreciated that while in an embodiment such as that illustrated in FIG. 2 wherein the discharge jet 46 is disposed proximate the pump outlet 86, the present disclosure is not meant to be so limited. Rather, in other embodiments that remain within the spirit and scope of the present disclosure, the discharge jet 46 may be disposed anywhere along the outlet line 52, or in another fluid line of the distribution module 20 that is fluidly connected to the pump outlet 86 and, in certain embodiments, downstream from the valve 58, such as, for example, in the circulation line 54 (e.g., in an exemplary embodiment, the jet 46 may be disposed within the circulation line 54 and upstream of a flow restrictor disposed in the circulation line 54, which will be described below).

As briefly mentioned above, in an exemplary embodiment, the valve 58 is operable to selectively allow liquid fluid flow from the pump outlet 86 to the fluid discharge jet 46 only when one or more predetermined criteria are met. Accordingly, in an embodiment wherein the valve 58 is a high pressure set point valve, the meeting of one or more predetermined criteria may result in an increase in the fluid pressure at the pump outlet 86 to a level meeting or exceeding the minimum fluid pressure level required to open the pressure-actuated valve 58. Alternatively, in an embodiment wherein the valve 58 comprises a electromechanical valve, such as, for example, a solenoid valve, the meeting of one or more predetermined criteria may result in the actuation of the or opening of the valve 58. The predetermined criteria may comprise any number of criteria including, without limitation, those described below.

For example, the criteria may relate to one or more parameters within the tank volume 24. One such parameter-based criterion may be that the temperature in the tank volume 24 falls below (or, in an exemplary embodiment, meets or falls below) a predetermined temperature threshold value, wherein the temperature threshold value may be the freezing point of the particular liquid being used. Another parameter-based criterion may be that the liquid level in the tank volume 24 exceeds (or, in an exemplary embodiment, meets or exceeds) a predetermined liquid level threshold value. Rather than, or in addition to, the criteria relating to parameter(s) in the tank volume 24, the criteria may relate to the occurrence of a particular event. For example, the criteria may be that a certain amount of time has elapsed since a given event, such as, for example, the starting of the vehicle, the energization of the SCR system 10, or the most recent opening of the valve 58.

Whether one or more criteria are met may be determined in a number of ways depending, of course, on the particular criterion or criteria being used. For example, in an instance where the criteria relate to one or more parameters in the tank volume 24, the fluid distribution system 12, and in an exemplary embodiment, the fluid distribution module 20 thereof, in particular, may include one or more sensors 68 and a controller 70. In such an embodiment, the sensor(s) 68 comprise the type(s) of sensor(s) required to measure or detect values for the one or more parameters relating to the relevant criteria. The sensor(s) 68 are operable to measure or detect values for those parameter(s), and to generate one or more electrical signals representative of the detected value(s). As will be described in greater detail below, the sensor(s) 68 may be disposed within the tank volume 24 or, in certain embodiments, outside of the tank 18.

The controller 70, which in an exemplary embodiment, is electrically connected (e.g., either by a wired connection or wirelessly) to the sensor(s) 68 and the pump assembly 40 (and the motor 44 thereof, in particular) and/or the valve 58, may comprise a programmable microprocessor or microcontroller, an application specific integrated circuit (ASIC), or other suitable device. The controller 70 may include a central processing unit (CPU) and an input/output (I/O) interface through which the controller 70 may receive input signals such as, for example, signals generated by the sensor(s) 68, and generate output signals including, for example and as will be described below, those used in the control of the operation (speed) of the fluid pump 42 and/or the actuation of the valve 58.

The controller 70 may be configured to perform various functions, such as those described in greater detail above and below, with appropriate programming instructions or code (i.e., software). Accordingly, the controller 70 is programmed with one or more computer programs encoded on a computer-readable storage medium for performing the functionality described herein.

The controller 70 may be disposed within the tank volume 24 and mounted on, for example, one of the components of the fluid distribution module 20 (e.g., the pump 42, the mounting flange 48, or one of the other components described herein). Alternatively, the controller 70 may be disposed external to the tank volume 24 and mounted on or in one of the other components of the fluid distribution system 12 or the SCR system 10 (e.g., in the housing 80), or may comprise a controller that is separate and distinct from the SCR system 10 altogether (e.g., a controller of another system or subsystem of the vehicle may be configured to perform the functions of the controller 70, and therefore, the controller 70 may comprise that particular controller).

In an exemplary embodiment, the controller 70 is operable to acquire a value detected by the sensor(s) 68 for each parameter of interest. This may comprise acquiring parameter value(s) detected by each sensor 68 in real-time (i.e., continuously monitoring the sensor signals in real-time), or acquiring previously detected parameter value(s) that is/are stored in a memory or other storage device that is part of or accessible by the controller 70. In an exemplary embodiment, the controller 70 is configured to acquire parameter values for each parameter by periodically sampling the value(s) detected by the sensor(s) 68 for each parameter of interest (e.g., sampling the sensor signals representative of the parameter value(s)) in accordance with a predetermined sampling rate.

Regardless of how the parameter value(s) are actually acquired, the controller 70 is configured to evaluate each of the acquired values to determine whether the criterion or criteria related to that particular parameter is met. In an exemplary embodiment, this may entail comparing each of the measured or detected parameter values with a corresponding predetermined parameter threshold value stored in a memory or storage device that is part of or accessible by the controller 70. In an exemplary embodiment, the parameter threshold value may be programmed into the controller 70 prior to the installation of the SCR system 10 into a vehicle. Alternatively, the parameter threshold value may be programmed into the controller 70 and/adjusted following installation of the SCR system 10 using any number of conventional user input devices, such as, for example, a keypad, a keyboard, a graphical user interface, etc., that may be electrically connected to the controller 70 to carry out this functionality.

If it is determined, based on the evaluation of one or more parameters, that the required criterion or criteria are met, then the controller 70 is operable to cause the valve 58 to open. In an exemplary embodiment wherein the valve 58 is a pressure-actuate valve, this entails adjusting the fluid pressure at the pump outlet 86 to a level that meets or exceeds the minimum fluid pressure level required to open the valve 58. More particularly, in an exemplary embodiment, the controller 70 is configured to control the pump motor 44 to increase the speed of the pump 42 to a determined level, thereby increasing the fluid pressure at the pump outlet 86 a sufficient amount to cause the valve 58 to open. Once opened, the valve 58 allows liquid fluid flow between the pump outlet 86 and the fluid discharge jet 46. Alternatively, if it is determined that the required criterion or criteria is/are not met, then the controller 70 does not adjust the pressure level at the pump outlet 86, or at least does not adjust the pressure level to a magnitude that would cause the valve 58 to open.

For example, assume that at least one criterion is the temperature-related criterion described above. In such an embodiment, the sensor 68 is a temperature sensor, such as, for example, a thermistor, operable to detect the temperature in the tank volume 24, and to generate an electrical signal representative of the detected temperature. The sensor 68 may be disposed within the tank volume 24 and mounted on, for example, the inner surface of one of the tank walls 22, or one of the components of the fluid distribution module 20 (e.g., the pump 42, the mounting flange 48, or one of the other components described herein). In any event, the sensor 68 should be sufficiently displaced from the heater 82 so as to prevent the heat generated by the heater 82 from adversely impacting the accuracy of the detected or measured temperature.

The controller 70 is operable to acquire a temperature value detected by the sensor 68. This may comprise acquiring a temperature value in real-time by continuously monitoring the sensor signals representative of the detected temperature in real-time, or a previously detected value that is stored in a memory or other storage device that is part of or accessible by the controller 70. In an exemplary embodiment, the controller 70 is configured to acquire the temperature value by sampling the temperature value detected by the sensor 68 (e.g., sampling the sensor signal(s) representative of the temperature value) in accordance with a predetermined sampling rate.

Regardless of how it is acquired, the controller 70 is configured to evaluate the acquired detected temperature value to determine whether the temperature-related criterion is met. In an exemplary embodiment, the criterion is that the temperature within the tank volume 24 is below (or, in an exemplary embodiment, meets or is below) a predetermined temperature threshold value. As such, the evaluation performed by the controller 70 may entail comparing the measured or detected temperature value with a predetermined threshold temperature value stored in a memory or storage device that is part of or accessible by the controller 70. If it is determined that the detected temperature value falls below (or, in an exemplary embodiment, meets or falls below) the temperature threshold value, the controller 70 is configured to determine that the criterion is, in fact, met. Alternatively, if it is determined that the temperature value exceeds (or, in an exemplary embodiment, meets or exceeds) the temperature threshold value, the controller 70 is configured to determine that the criterion is not met.

If the criterion is met, the controller 70 is further operable to cause the valve 58 to open. More particularly, in an embodiment wherein the valve 58 is a pressure-actuated valve, the controller 70 may be operable to adjust the fluid pressure at the pump outlet 86 to a level meeting or exceeding the minimum fluid pressure level required to open the valve 58. In an exemplary embodiment, this is accomplished by sufficiently increasing the speed of the pump motor 44, and therefore, the pump 42. Otherwise, the controller 70 does not adjust the fluid pressure at the pump outlet 86, or at least does not adjust it to a degree that the fluid pressure is sufficient to cause the valve 58 to open, and therefore, the valve 58 remains closed.

Alternatively, in an embodiment wherein the valve 58 comprises an electromechanical valve, the controller 70 is operable to control the valve 58 to open when the criterion is met. For example, the controller 70 may send an actuation signal to the valve 58 that causes the valve 58 to actuate or open.

A similar process may be performed when the criterion or criteria relates to the liquid level in the tank volume 24. In such an embodiment, the sensor 68 comprises a fluid level sensor operable to detect or measure the level of the liquid 30 in the tank volume 24, and to generate an electrical signal representative of the detected liquid level. As with the embodiment wherein the sensor 68 is a temperature sensor, the sensor 68 may be disposed within the tank volume 24 and may be mounted on, for example, the inner surface of one of the tank walls 22, or one of the components of the fluid distribution module 20 (e.g., the pump 42, the mounting flange 48, or one of the other components described herein).

In this embodiment, the controller 70 is operable to acquire a liquid level value detected by the sensor 68. This may comprise acquiring a liquid level value in real-time by continuously monitoring the sensor signal(s) representative of the detected liquid level in real-time, or a previously detected value that is stored in a memory or other storage device that is part of or accessible by the controller 70. In an exemplary embodiment, the controller 70 is configured to acquire the liquid level value by sampling the liquid level value detected by the sensor 68 (e.g., sampling the sensor signal(s) representative of the liquid level value) in accordance with a predetermined sampling rate.

Regardless of how it is acquired, the controller 70 is configured to evaluate the acquired detected liquid level value to determine whether the liquid level-related criterion is met. In an exemplary embodiment, the criterion is that the level of the liquid 30 in the tank volume 24 exceeds (or, in an exemplary embodiment, meets or exceeds) a predetermined liquid level threshold value. As such, the evaluation performed by the controller 70 may entail comparing the measured or detected liquid level value with a predetermined threshold liquid level value stored in a memory or storage device that is part of or accessible by the controller 70. If it is determined that the liquid level value exceeds (or, in an exemplary embodiment, meets or exceeds) the liquid level threshold value, the controller is configured to determine that the criterion is, in fact, met. Alternatively, if it is determined that the liquid level value falls below (or, in an exemplary embodiment, meets or falls below) the liquid level threshold value, the controller is configured to determine that the criterion is not met.

In another exemplary embodiment, rather than acquiring liquid level value(s) from the sensor 68 and then using those acquired values to determine whether the criterion is met, the sensor 68 may comprise an "on/off switch" type of sensor such as, for example, a float actuated switch, operable to indicate when a fluid level-related criterion is met. More particularly, in such an embodiment, the sensor 68 may be configured to turn "on" when the fluid level in the tank reaches a predetermined threshold level, and to turn or remain "off" when the fluid level is below the threshold level. Accordingly, when the sensor 68 is "on," a signal may be provided to the controller 70 indicative of the criterion being met, and if the sensor 68 is "off," no signal or a signal indicative of the criterion not being met may be provided to the controller 70.

In any event and as described above, if the criterion is met, the controller 70 is further operable to cause the valve 58 to open in the same or similar manner as that described above with respect to the temperature-related criterion, the description of which will not be repeated here.

It will be appreciated that in an exemplary embodiment, only one parameter-based criterion may be employed, and thus, the module 20 may comprise a single sensor 68, or multiple sensors of the same type (e.g., multiple temperature sensors, multiple fluid level sensors, etc.). Alternatively, in another embodiment wherein multiple parameter-based criteria are used in conjunction with each other, the fluid module 20 may include one or more sensors 68 corresponding to each parameter being evaluated (e.g., one sensor to detect temperature, another sensor to detect liquid level, etc.). Accordingly, it will be appreciated that while the description herein may be primarily directed to a "single sensor" embodiment, embodiments including multiple sensors, whether operable to detect values of the same or different parameters, remain within the spirit and scope of the present disclosure.

As briefly described above, another criterion that may be used relates to the amount of time that has elapsed since the occurrence of a certain event (e.g., a predetermined period of time has elapsed since the vehicle was started, the SCR system 10 was energized, a predetermined period of time has elapsed since the valve 52 was last opened, etc.). In such an embodiment, the controller 70 may be configured to identify when the particular event occurred, and to then monitor or keep track of the elapsed time following the occurrence. The controller 70 may be further configured to determine that the criterion has been satisfied once a predetermined period of time has elapsed. This may include, for example, the controller 70 periodically comparing the amount of time that has elapsed to a predetermined threshold period of time stored in a memory or storage device that is part of or accessible by the controller, and then based on that comparison, determining whether the criterion has been met. Alternatively, the controller 70 may continuously monitor the elapsed time and then make the determination once it determines that the predetermined period of time has elapsed.

For example, in an exemplary embodiment, the controller 70 is configured to identify, either by receiving a signal or otherwise, that the vehicle has been started. In such an embodiment, the controller 70 is further configured to determine when a predetermined amount of time (e.g., 20 minutes) from the starting of the vehicle has elapsed. Once the controller 70 has determined that the requisite amount of time has elapsed, the controller 70 is further configured to determine that the criterion has, in fact, been met.

Similar to the criteria described above, if the controller 70 determines that the time-based criterion has been met, and that all other required criteria have also been met, the controller 70 is operable to cause the valve 58 to open in the same or similar manner as that described above with respect to the temperature-related criterion, the description of which will not be repeated here.

In addition to the functionality described above, in another exemplary embodiment, the controller 70 may be configured to identify, either by receiving a signal or otherwise, when the valve 58 was last opened (i.e., when the controller 70 last controlled the pump 42 to increase the fluid pressure at the pump outlet 86, thereby causing the valve 58 to open, or last actuated the valve 58, etc.). In such an embodiment, the controller 70 may be further configured to determine when a predetermined amount of time has elapsed from the most recent opening of the valve 58. Once it has determined that the requisite amount of time has elapsed, the controller 70 is further configured to determine that corresponding criterion has, in fact, been met.

If the criterion has been met, and all other required criteria are also met, the controller 70 is operable to cause the valve 58 to open in the same or similar manner described above with respect to the temperature-related criterion, the description of which will not be repeated here.

It will be appreciated that the particular criteria identified above are provided for exemplary purposes only and are not meant to comprise an exhaustive list of all criteria that may be used. Rather, any number of other criteria may be used in the same or similar manner as that described herein, and the use of such other criteria remains within the spirit and scope of the present disclosure. Further, it will be appreciated that each of the above described criterion may be utilized individually or may be used in conjunction with one or more other criteria, including those described above or otherwise.

Regardless of the particular criteria being evaluated, the controller 70 may be further configured to limit the amount of time that the valve 58 remains opened once it is determined that the required criterion or criteria has/have been met. More particularly, in an exemplary embodiment, the controller 70 is configured to increase the fluid pressure at the pump outlet 86 to open the valve 58 by increasing the speed of the pump 42 for a predetermined period of time (e.g., 30 seconds), and to then to reduce the pressure to close the valve 58 by decreasing the speed of the pump. Alternatively, in an exemplary embodiment, the controller 70 may be configured to actuate the valve 58 and keep the valve 58 open for a predetermined period of time, and then deactivate the valve 58. One purpose for limiting the amount of time that the valve 58 is open, and thus, the time liquid 30 is discharged from the discharge jet 46, is to attempt to ensure that an adequate amount of liquid 30 is available around the distribution module 20 that the pump 42 may distribute in the operation of the SCR system 10. The controller 70 may be further configured to keep the valve 58 closed until it is once again determined that the predetermined criterion or criteria has/have been met. Accordingly, the selective opening and closing of the valve 58 prevents or at least substantially reduces the chance that the distribution of liquid 30 by the jet 46 will not leave an adequate amount of liquid 30 for operating the system 10.

While the description above has been generally limited to an embodiment comprising a single fluid discharge jet 46, those of ordinary skill in the art will appreciate that the present disclosure is not meant to be so limited. Rather, in other exemplary embodiments that remain within the spirit and scope of the present disclosure, such as, for example, that illustrated in FIG. 3, the fluid distribution module 20 may comprise a plurality of fluid discharge jets 46 (e.g., jets 46₁, 46₂, 46₃,...,46_{N}). In such an embodiment, each of the fluid discharge jets 46 may be configured to operate in the same or similar manner described above. However, while FIG. 3 illustrates all of the discharge jets 46 having an orientation such that each jet 46 is operable to discharge liquid 30 in a substantially vertical direction, the present disclosure is not meant to be so limited. Rather, in other exemplary embodiments, one or more of the discharge jets 46 may have an orientation such that it is operable to discharge liquid 30 in a substantially horizontal direction, or in a direction that is somewhere between an exactly horizontal direction and an exactly vertical direction.

As briefly mentioned above, the fluid module 20 may further include a fluid filter 72. One example of a fluid module that includes a fluid filter is that described in U.S. Patent Application Serial No. 13/561,381 filed on July 30, 2012, the entire disclosure of which was incorporated herein by reference above. The fluid filter 72 is a component capable of removing contaminants from the liquid 30 that flows through it. In one embodiment, the filter 72 is configured to remove solid particles of a certain size or larger from the liquid 30 as the liquid flows through it. In some fluid handling applications, other types of filters may be used to remove other types of contaminants such as unwanted chemicals from the liquid. As shown, the fluid filter 72 may be located within the tank volume 24, but may be located at least partially outside of the tank 18.

The fluid filter 72 may include a housing 90, a filter element 92, and inlet and outlet sides 94 and 96. The filter element 92 is located in an internal volume of the housing 90 and may be positioned between the inlet and outlet sides 94, 96. The housing 90 may at least partially seal off the perimeter or other area of the filter element 92 so that at least some of the liquid 30, and preferably all of the liquid 30, entering the inlet side 94 of the filter 72 must pass through the filter element 92 before being discharged at the outlet side 96 of the filter and into the tank volume 24. Inlet and outlet ports that provide access to the internal volume of the housing 90 may be provided. The filter housing 90 may also include various internal channels, baffles, and/or compartments to direct liquid fluid flow therein to help optimize the available surface area of the filter element 92, for example, or to facilitate convenient arrangement of inlet and/or outlet ports for connection to other system components. The housing 90 may include a separate lid or top (not shown) to enclose the filter element 92 in the housing 90 and/or to form a seal at the top of the filter element 92. The housing 90 may be constructed in any shape or size to suit the particular application. In at least some implementations, the housing is shaped to at least partially surround one or more distribution module components.

In the embodiment in FIG. 2, the inlet side 94 of the filter 72 is fluidly connected to the pump inlet 84 and the pump outlet 86 via various fluid lines and valves, and the outlet side 96 of the filter 72 includes one or more fluid discharge jets or outlet ports 98 through which filtered liquid may be discharged from the filter 72 and into the tank volume 24. In the embodiment illustrated in FIG. 2, the inlet side 94 of the filter 72 is located at the top of the filter 72 and the outlet side 96 is located at the bottom. In other exemplary embodiments, however, the inlet and outlet sides 94, 96 may be located at any two transverse sides of the filter 72. For example, the inlet side 94 may be located at the side of the filter 72 farthest from (or facing away from) the pump 42, and the outlet side 96 may be located at the side of the filter 72 closest to (or facing) the pump 42. Accordingly, the inlet and outlet of the filter may be arranged in a number of ways, all of which remain within the spirit and scope of the present disclosure.

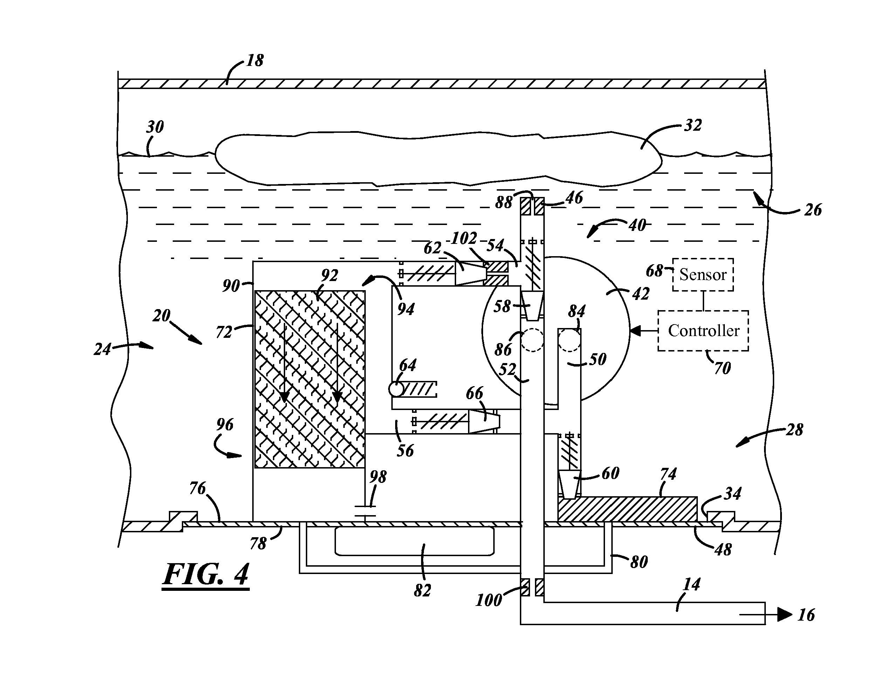

As illustrated in FIG. 2, the outlet port(s) 98 may be oriented in a manner such that liquid 30 is discharged therefrom in a substantially horizontal direction, though the present disclosure is not meant to be so limited. Further, as illustrated in FIG. 4 and for the same reasons set forth above with respect to the discharge jet 46, in an exemplary embodiment, the filter 72 may be downstream from the pressure-actuated valve 58. In such an embodiment, the liquid 30 from the pump outlet 86 is circulated through the filter 72 and discharged into the tank volume 24 through the outlet port(s) 98 only when the certain predetermined criteria, such as those described in great detail above, is/are met and the valve 58 is opened. Accordingly, in such an embodiment, the valve 58 is disposed between the pump outlet 86 and both the fluid discharge jet(s) 46 and the filter 72, and is operable to selectively allow liquid fluid flow therebetween.

The filter element 92 may be a liquid permeable component that allows liquid to flow through it, while trapping or otherwise preventing particles that are a certain size or larger from passing through it. Different types of filter elements 92 and filter media are known and may be constructed to have different amounts of total surface area and/or multiple layers of materials to affect the capacity of the fluid filter 72, among other filter characteristics.

The mounting flange 48 is a component that supports and/or provides an attachment location for one or more other module components, such as the pump assembly 40 and/or the fluid filter 72. The flange 48 may also serve as a cover or closure for the module opening 34 in the tank wall 22 and may be attached at or near the edge of the opening 34 as shown. Where the SCR system 10 includes the heater 82 on the outer side 78 of the flange 48, it may be preferable to construct the flange 48 from a metal or other type of thermally conductive material (e.g., a thermally-conductive polymer-based material) so that thermal energy can be readily transferred through the thickness of the flange 48 and into the tank volume 24 to help thaw any frozen material 32 inside the tank.

Turning now to the particular arrangement of fluid lines, valves, and connections between components shown in FIG. 2, in an exemplary embodiment, the fluid distribution module 20 includes an inlet line 50, an outlet line 52, a circulation line 54, and a purge line 56. The inlet line 50 connects the tank volume 24 to the pump inlet 84 so that liquid 30 can enter the fluid pump 42 during a distribution cycle - i.e., when the module 20 is operating to provide liquid 30 to the injector 16 of the SCR system 10. An inlet check valve 60 may be provided in the inlet line 50 and may be operable to allow flow through the inlet line 50 to the pump inlet 84 and to prevent flow from the inlet line 50 into the tank volume 24. The strainer 74 may be attached to the inlet line 50 between the tank volume 24 and the inlet valve 60 to remove particles from the liquid 30 before it is enters the pump 42.

The outlet line 52 connects the pump outlet 86 to a module outlet port 100 so that the liquid 30 can exit the module 20 during the distribution cycle. In this embodiment, the outlet line 52 passes through openings in the flange 48 and the housing 80 and may have a connector or other type of end configuration suitable for attachment and/or detachment of the device supply line 14. As described above, in an exemplary embodiment, the output line 52 further connects the pump outlet 86 to the fluid discharge jet 46. In such an embodiment, the jet 46 may be positioned proximate the pump outlet 86 as illustrated, or at any other location along the outlet line 52.

The circulation line 54 connects the pump outlet 86 to the fluid filter 72. More specifically, the illustrated circulation line 54 fluidly connects the outlet line 52 to the inlet side 94 of the filter 72. The circulation line 54 may be connected to the outlet line 52 anywhere between the pump outlet 86 and the outlet port 100 as shown. In another embodiment, the circulation line 54 may connect the fluid filter 72 to the supply line 14. The circulation line 54 can accommodate a flow rate of liquid from the fluid pump 42 that is in excess of that required to operate the injector 16 of the SCR system 10. An optional flow restrictor 102 may be positioned in or along the circulation line 54 to limit the volumetric flow rate of liquid therethrough and thereby maintain a minimum fluid pressure in the device supply line 14 and/or at the injector 16. The flow restrictor 102 may include an aperture having a known size, or it may have a variable and/or controllable aperture size. Thus, at least a portion of the circulation line 54 may be described as a high-flow and low pressure branch off of outlet line 52.

A circulation valve 62 may be provided in the circulation line 54 and may be operable to allow flow through the circulation line 54 to the fluid filter 72, such as during the distribution cycle or forward operation of the fluid pump 42. The circulation valve 62 may also be operable to prevent backflow through the circulation line 54 and the fluid filter 72, such as during the purge cycle or reverse operation of the fluid pump 42. The illustrated circulation valve 62 is a check valve that allows liquid fluid flow in only one direction, away from the fluid pump 42 and toward the fluid filter 72. The valve 62 may have a relatively low pressure set point so to allow the substantial free flow of liquid from the pump 42 to the filter 72. Alternatively, and for the same purposes described above with respect to the valve 58 and the jet(s) 46, the circulation valve 62 may comprise a high pressure set point valve, an electromechanical valve, or any other suitable valve that is configured to open only as a result of one or more criteria being met so as to allow for the selective flow of liquid therethrough.

A relief valve 64 may also be provided in fluid communication with the inlet side 94 of the fluid filter 72. The illustrated relief valve 64 is operable to allow liquid to flow out of the circulation line 54 and into the tank volume 24 and/or to prevent damage to the fluid filter 72 when the excess volumetric flow is too great for the fluid filter 72 to accommodate all of the excess flow (e.g., when filter components are blocked by frozen material). The relief valve 64 may be positioned anywhere along the circulation line 54 or along the inlet side 94 of the filter 72 to relieve circulation line or filter pressure as necessary during the distribution cycle. In this example, the relief valve 64 is located between the check valve 62 and the fluid filter 72 so that it may also relieve line pressure as necessary when the filter 72 receives liquid from other sources, such as during a purge cycle as outlined below.

The purge line 56 is fluidly connected to the pump inlet 84 and is configured to return liquid 30 from other parts of the SCR system 10 back into the tank volume 24 during a purge cycle. In the illustrated embodiment, the purge line 56 connects the inlet line 50 to the filter 72 to perform this function. In particular, one end of the purge line 56 is connected to the inlet line 50 between the pump inlet 84 and the inlet check valve 60. The other end of the purge line 56 is connected to the inlet side 94 of the filter 72, in this embodiment. This arrangement can provide additional fluid filtration during the purge cycle, as will be described further. In another embodiment, the end of the purge line 56 opposite the pump inlet end may be located in the tank volume 24 so that purged liquid 30 is discharged from the purge line directly to the tank volume 24 without passing through the filter 72. The purge valve 66 may be provided in the purge line 56 and is operable to prevent liquid fluid flow through the purge line 56 when the fluid pump 42 is operated to pump liquid 30 out of the pump outlet 86, such as during the distribution cycle or during forward operation of the fluid pump 42. The purge valve 66 is also operable to allow liquid fluid flow through the purge line 56 when the fluid pump 42 is operated to pump liquid 30 out of the pump inlet 84, such as during the purge cycle. The illustrated purge valve 66 is a purge check valve that allows fluid flow in only one direction, away from the fluid pump 42 and toward the fluid filter 72.

With reference to FIG. 2, the housing 80 of the module 20 may be useful to enclose various components, such as the heater 82, within the module 20 while isolating them from the environment inside the tank 18 and outside the housing 80. The heater 82 can be any type of heat source that can deliver thermal energy to the tank volume 24. The heater 82 may be located in the housing 80 as shown or anywhere else in the system, and multiple heaters may be employed. In various embodiments, the housing 80 may be useful to enclose additional components of the module 20, such as the controller 70 and/or one or more sensors 68.

Operation of a system that includes the fluid distribution module 20 can be described in terms of a distribution cycle and a purge cycle. A distribution cycle occurs during normal operation of the SCR system 10 wherein a reducing agent is delivered from the storage tank 18 to the exhaust gas stream to be treated. In cold weather, some or all of the reducing agent in the system may be frozen at the beginning of a distribution cycle due to system inactivity. A heater, such as heater 82 of FIG. 2, may be energized at the beginning of a distribution cycle under such conditions prior to the fluid pump 42 being energized. After heating for a given period of time or after a certain amount of reducing agent has been thawed, the fluid pump 42 may be energized so that it draws liquid 30 from the tank volume 24, through the strainer 74, through the inlet line 50, through the open inlet valve 60, and into the pump inlet 84. The purge valve 66 is closed during the distribution cycle due to its connection at the lower pressure inlet side of the pump and its orientation with respect to the pressurized filter 72.

Liquid 30 drawn into the pump 42 from the tank volume 24 exits the pump 42 via the pump outlet 86 and pressurizes the outlet line 52, the device supply line 14, and the circulation line 54. The circulation line 54 and/or the flow restrictor 102 are sized to allow a particular volumetric rate of liquid fluid flow therethrough, which may be up to two orders of magnitude or more higher than the volumetric rate of liquid fluid flow through the supply line 14. Liquid flows through the circulation line 54 and the open circulation valve 62 to reach the inlet side 94 of the filter 72, where it continues to flow through the filter element 92 to the outlet side 96 of the filter 72. Liquid further continues through the circulation jet 98 and into the tank volume 24, where it may again be drawn into the pump 42 for recirculation and additional filtering. The circulation jet 98 may be located at or near the bottom of the filter housing 90 or otherwise located to direct liquid fluid flow toward other module components, where the already thawed and circulated reducing agent being expelled from jet 98 may be useful to help continue the thawing process and ensure a supply of liquid reducing agent for the pump to draw from the tank volume 24. This type of jet placement combined with the high volumetric flow rate of liquid through the filter may facilitate faster melting of frozen material in the tank volume 24.

Additionally, when certain predetermined criteria are met, liquid 30 exiting the pump 42 via the pump outlet 86 may also flow through the valve 58 to reach the fluid discharge jet 46. This liquid 30 may be discharged from the jet(s) 46 and into the tank volume 24, where it may again be drawn into the pump 42 for use in by the SCR system 10. As described above, the fluid discharge jet 46 may be proximate the pump outlet 86 or otherwise located to direct liquid fluid flow toward frozen material 32 in the tank volume 24. The liquid 30 being expelled from jet 46 may be useful to help continue the thawing process of the frozen material 32 in an attempt to ensure that a sufficient supply of liquid reducing agent exists in the tank volume 24 for use by the pump 42. The expelled liquid 30 may also cause the formation of a passage extending through the frozen material 32 from a vapor area or space located above the frozen material 32 that serves the purposes described elsewhere herein.

The fluid filter 72 as arranged in the example of FIG. 2 may be considered a by-pass or parallel filter that continually filters the liquid 30 within the tank volume 24 during a distribution cycle before the liquid 30 ever reaches the device supply line 14. The volumetric flow capacity of the pump 42 relative to the volume of the stored liquid 30 may be such that the entire volume of the stored liquid can be filtered multiple times per hour during a distribution cycle when the liquid is not frozen. This arrangement and others like it may quickly and effectively filter the entire volume of reducing agent or other stored liquid after the tank 18 is filled, possibly eliminating the need for an in-line filter of any size. In one embodiment, the pump outlet 86 is fluidly connected to an injector 16 without an in-line fluid filter between the pump outlet 86 and the injector 16. Of course, in other embodiments, a low-capacity filter (not shown) may be included in-line with the supply line 14, the inlet line 50, or the outlet line 52. Such an auxiliary low capacity filter may be used to filter any initial small amount of liquid that finds its way into the supply line 14 after a refill of tank 18 and before passing through filter 72, but may be unnecessary. For example, the distribution module 20 could be energized with the device 16 in a closed position for any period of time so that the liquid 30 in the tank is continually filtered even when the device 16 is not in use.

Elimination or size-reduction of any filter in-line with the supply line 14 may help the system to provide reducing agent to the injector or other delivery point more quickly on system start up due to the absence or reduction of additional frozen material that may otherwise be present in the in-line filter and that would require thawing to allow liquid 30 to reach the injector. Such in-line filter thawing may be exceptionally slow where the filter is located in a low flow rate portion of the system. Additionally, locating the filter 72 within the tank volume 24 in a by-pass arrangement as shown can provide in-tank liquid circulation that may accelerate thawing of frozen material in the tank and/or near other module 20 components.

Additional advantages may be realized by the use of a by-pass filter in the fluid distribution system during a purge cycle as noted below. The purge cycle may be initiated after the distribution cycle ends and before system shutdown. During the purge cycle, the fluid pump 42 may be operated in reverse to draw liquid 30 from system lines and discharge the liquid 30 into the tank volume 24 so that the liquid is not allowed to freeze while in the system lines and/or other system components, particularly in those lines and/or other components outside of the tank 18.

Referring again to FIG. 2, liquid fluid flow through the fluid pump 42 during the purge cycle is such that the pump outlet 86 becomes the low pressure side of the pump and the pump inlet 84 becomes the high pressure side of the pump. Liquid 30 is drawn from the supply line 14, through the outlet line 52, and into the pump outlet 86. Air or other gas from the exhaust conduit is allowed to enter the device end of the supply line 14 by placing the injector in an open condition, for example, to prevent a vacuum from forming in the supply line 14. This may be accomplished by other means, such as opening a valve located near the injector. The circulation valve 62 remains closed during the purge cycle so that no backflow of liquid 30 is allowed through the fluid filter 72. The liquid fluid flow continues from the fluid pump 42, out of the pump inlet 84, and into the inlet line 50. The inlet line 50 is closed-off by inlet valve 60, and all of the liquid 30 purged from the system lines continues through the purge line 56, through the open purge valve 66, to the inlet side 94 of the filter 72, through the filter element 92, and into the tank volume 24 through the outlet port 98. The purge cycle may continue for some period of time even after all of the liquid has been expelled from the module to allow gaseous fluid to flow through the system, including through the filter 72 where it may be useful to remove liquid absorbed in the filter element 92.

Arranged as shown and described, the filter 72 is not subjected to backflow of liquid during the distribution or purge cycles. Thus, particles captured by the filter element are not directly washed back into the tank volume 24. That is, in the implementation discussed above, liquid fluid flow through the filter 72 is always in the same direction during the distribution and purge cycles, as indicated by the arrows in FIG. 2, so that fluid filtration is provided even during the purge cycle. Stated differently, liquid flows through the filter element 92 from the inlet side 94 of the filter 72 to the outlet side 96 of the filter when the fluid pump 42 is operated to pump liquid 30 out of the pump outlet 86 and when the fluid pump 42 is operated to pump liquid 30 out of the pump inlet 84. Further, because the filter 72 is located on the outlet side of the pump 42 during a purge cycle, particles and contaminate captured by the filter element are not drawn backwards through the pump 42 during the purge cycle as they would if the filter 72 was disposed on the inlet side of the pump 42 during a purge cycle. As a result, the life of the pump 42 may be prolonged.

Including the fluid filter 72 along the low pressure circulation line 54 rather than the higher pressure device supply line 14 may make it unnecessary to utilize pump flow to compress the air within the filter housing during system start-up, and may also allow the use of larger system filters. For example, locating the fluid filter 72 along a low pressure portion of the system as described can allow filter components, such as the filter housing, to be designed with larger surfaces areas while being subjected to the same forces or internal loads as smaller filter components located in a high pressure portion of the system.

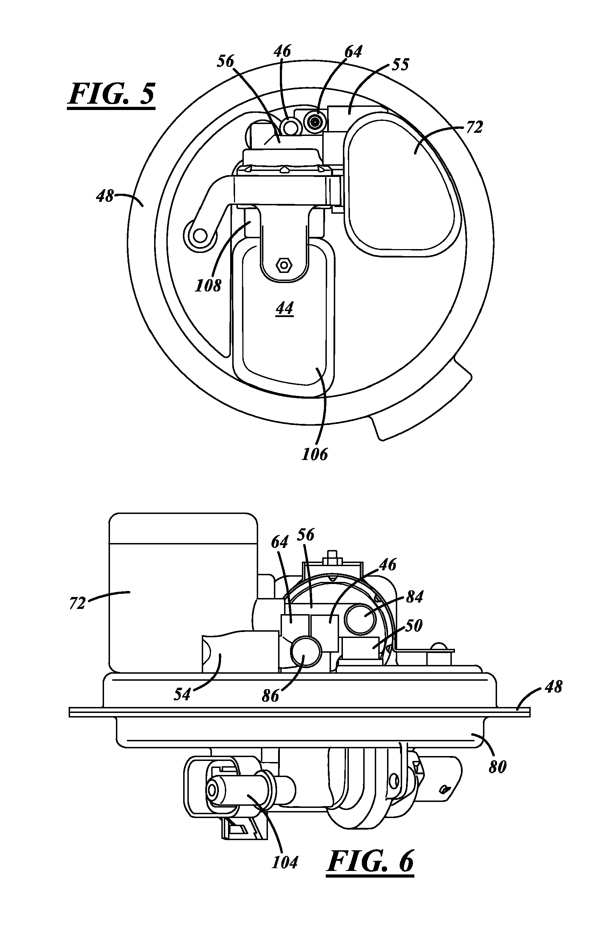

FIGS. 5 and 6 show various components of an illustrative fluid distribution module 20, demonstrating one example of a physical arrangement of at least some of the components depicted schematically in FIG. 2. A top view of the fluid distribution module is 20 is shown in FIG. 5. Visible in this view are some earlier-described components, such as the pump assembly 40 and the fluid pump 42 and motor 44 thereof, the distribution fluid jet 46, the mounting flange 48, the relief valve 64, and the filter 72. A side view of the module 20 is shown in FIG. 6. In addition to those components illustrated in FIG. 5, additional components visible in this view include a connector 104 for connecting the outlet line 52 to a device supply line to allow fluid to flow from the module 20 to other components of the system 10. Also depicted in FIG. 6 are representations of the circulation line 54, the purge line 56, the pump inlet 84, and the pump outlet 86, as well as the housing 80 within which a heater, for example, is disposed.

In this example, the fluid pump 42 is operated or driven by the motor 44 located beneath, or at least partially disposed in, a housing 106 formed in the flange 48. The motor 44 may thus be located outside of the tank volume 24 on the outer side 78 of the flange 48 when the module 20 is installed in the storage tank 18. The motor 44 may be magnetically coupled to the fluid pump 42 via adjacent coupling components, where one coupling component (not shown) is attached to the motor 44 and the other coupling component (component 108 in FIG. 5) is attached to the fluid pump 42. One of the coupling components may include magnetic material, and the other may include magnetic or ferromagnetic so that the coupling components rotate about a longitudinal axis in unison, thereby transferring rotational motion of the motor to the appropriate pump component to cause the pump to operate.

It will be appreciated that while the physical arrangement depicted in FIGS. 5 and 6 is the only physical arrangement of the module 20 shown and described herein, the present disclosure is not meant to be limited to such a physical arrangement. Rather, other physical arrangements allowing for the module 20 and the components thereof to function in the manner described above may be used, and therefore, such other physical arrangements remain within the spirit and scope of the present disclosure.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A fluid distribution module, comprising:
a pump assembly comprising a fluid pump having a pump inlet configured to receive liquid from an inner tank volume and a pump outlet fluidly connected to a module outlet port;
a fluid discharge jet fluidly connected to the pump outlet and operable to discharge liquid from the pump outlet and into the tank volume; and
a valve disposed between the pump outlet and the fluid discharge jet operable to selectively allow liquid fluid flow from the pump outlet to the fluid discharge jet when one or more predetermined criteria are met.

2. The fluid distribution module of claim 1, further comprising a controller electrically coupled to the pump assembly, the controller operable to determine if the one or more criteria are met and to control the operation of the valve.

3. The fluid distribution module of claim 1, wherein the valve comprises one of a pressure-actuated valve configured to open when the fluid pressure at the pump outlet meets or exceeds a minimum fluid pressure level required to open the valve as a result of the one or more predetermined criteria being met, and an electromechanical valve configured to be actuated when the one or more criteria are met.

4. The fluid distribution module of claim 1, further comprising a sensor configured to detect a value of a predetermined parameter in the tank volume, the predetermined parameter corresponding to the predetermined criteria.

5. The fluid distribution module of claim 4, wherein the valve comprises a pressure-actuated valve, the pump assembly further comprises a motor operable to drive the pump of the pump assembly, and the fluid distribution module further comprises a controller electrically connected to the sensor and the motor, the controller being operable to:
acquire the parameter value detected by the sensor;
evaluate the acquired parameter value to determine whether the one or more predetermined criteria are met; and
adjust the fluid pressure at the pump outlet to a level that meets or exceeds the minimum fluid pressure level required to open the pressure-actuated valve by adjusting the speed of the motor, and therefore, the pump, responsive to a determination that the one or more predetermined criteria are met.

6. The fluid distribution module of claim 4, wherein the one or more predetermined criteria comprises the temperature in the tank volume falling below a predetermined temperature threshold value, the acquired parameter value comprises a detected temperature in the tank volume, and the fluid distribution module further comprises a controller electrically connected to the sensor, and further wherein:
the sensor comprises a temperature sensor operable to detect a temperature in the tank volume; and
the controller is operable to compare the detected temperature with the predetermined threshold temperature value, and determine that the one or more predetermined criteria are met when the temperature in the tank volume falls below the predetermined temperature threshold value.

7. The fluid distribution module of claim 4, wherein the one or more predetermined criteria comprises the liquid level in the tank volume exceeding a predetermined liquid level threshold value, the acquired parameter value comprises the liquid level in the tank volume, and the fluid distribution module further comprises a controller electrically connected to the sensor, and further wherein:
the sensor comprises a liquid level sensor operable to detect at least a threshold liquid level in the tank volume; and
the controller is operable to determine if the threshold liquid level is present in the tank, and to determine that the one or more predetermined criteria are met when at least the threshold liquid level is present in the tank.

8. The fluid distribution module of claim 1, wherein the fluid discharge jet is oriented such that it is operable to discharge liquid in a substantially vertical direction toward an upper portion of the tank volume.

9. The fluid distribution module of claim 1, wherein the fluid discharge jet is a first fluid discharge jet and the fluid distribution module further comprises a second fluid discharge jet, the second fluid discharge jet being fluidly connected to the pump outlet and operable to discharge liquid from the pump outlet and into the tank volume.

10. The fluid distribution module of claim 1, further comprising a fluid filter having an inlet side fluidly connected to the pump outlet, an outlet side including an outlet port for discharging liquid from the filter and into the tank volume, and a filter element disposed between the inlet and outlet sides of the fluid filter capable of removing contaminants from liquid that flows through the filter element.

11. The fluid distribution module of claim 10, further comprising a valve disposed between the pump outlet and both the inlet side of the fluid filter and the fluid discharge jet operable to selectively allow liquid fluid flow from the pump outlet to the fluid filter and fluid discharge jet when one or more predetermined criteria are met.

12. A fluid distribution system for use in a selective catalytic reduction (SCR) system, comprising:
a tank having an inner volume containing liquid, the inner volume including a top portion and a bottom portion; and
a fluid distribution module disposed within the tank inner volume, wherein the fluid distribution module comprises:
a pump assembly comprising a fluid pump having an inlet configured to receive liquid from the bottom portion of the tank inner volume, and a pump outlet fluidly connected to a module outlet port;
a fluid discharge jet fluidly connected to the pump outlet and operable to discharge liquid from the pump outlet and into the tank inner volume in a substantially vertical direction toward the top portion of the tank inner volume; and
a valve disposed between the pump outlet and the fluid discharge jet operable to selectively allow liquid fluid flow from the pump outlet to the fluid discharge jet when one or more predetermined criteria are met, the valve being configured to open as a result of the one or more predetermined criteria being met.

13. The fluid distribution system of claim 12, further comprising:
a sensor disposed within the tank inner volume and operable to detect a value of a predetermined parameter in the tank inner volume, the predetermined parameter corresponding to the one or more predetermined criteria; and
a controller electrically connected to the sensor, wherein the controller is operable to:
acquire the parameter value detected by the sensor;
evaluate the acquired parameter value to determine whether the one or more predetermined criteria are met; and
control the operation of the valve responsive to a determination that the one or more predetermined criteria are met.
